(19) Europäisches Patentamt
European Patent Office
Office européen des brevets

(11) EP 2 894 433 B1

(12) **EUROPEAN PATENT SPECIFICATION**

(45) Date of publication and mention
of the grant of the patent:
**26.09.2018 Bulletin 2018/39**

(21) Application number: **12884078.2**

(22) Date of filing: **16.11.2012**

(51) Int Cl.:
**G01B 15/02** (2006.01)

(86) International application number:
**PCT/JP2012/007373**

(87) International publication number:
**WO 2014/037984 (13.03.2014 Gazette 2014/11)**

(54) **X RAY THICKNESS METER**

RÖNTGENSTRAHLUNGSDICKENMESSER

DISPOSITIF DE MESURE D'ÉPAISSEUR PAR RAYONS X

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2012 JP 2012198531**

(43) Date of publication of application:
**15.07.2015 Bulletin 2015/29**

(73) Proprietor: **Kabushiki Kaisha Toshiba
Minato-ku
Tokyo 105-8001 (JP)**

(72) Inventor: **KAGAWA, Takeshi
Minato-ku, Tokyo 105-8001 (JP)**

(74) Representative: **Hoffmann Eitle
Patent- und Rechtsanwälte PartmbB
Arabellastraße 30
81925 München (DE)**

(56) References cited:
**JP-A- S5 740 604       JP-A- S5 862 508
JP-A- H03 237 310     JP-A- S56 106 107
JP-A- 2006 184 183    US-A- 4 088 886
US-A- 4 510 577        US-A1- 2003 142 883
US-A1- 2007 116 183  US-A1- 2011 002 813
US-A1- 2011 310 376**

**Description**

[Technical Field]

Embodiments of the present invention relate to an X-ray thickness gauge.

[Background Art]

An X-ray thickness gauge is an apparatus to continuously measure a thickness of a moving plate (hereinafter, written as a plate thickness) such as a steel plate. This X-ray thickness gauge irradiates a plate with X-ray, to measure an amount of X-ray attenuated by the plate (hereinafter, written as an X-ray attenuation amount), and converts the relevant measured X-ray attenuation amount into a plate thickness, to measure the plate thickness. In addition, the relation between an X-ray attenuation amount and a plate thickness is non-linear.

Accordingly, it is necessary to previously create a calibration curve, from plate thicknesses of a plurality of reference plates with known plate thicknesses, and the detected doses of the X-ray, at the time of measuring plate thicknesses of the respective reference plates.

However, since the detected dose varies depending on various disturbance factors, even if the X-ray attenuation amount is converted into a plate thickness, using the above-described calibration curve, inconvenience such that a plate thickness cannot be accurately measured is caused.

In addition, as the above-described disturbance factors, temperature change of a cooling medium to cool an X-ray generator, temperature change and humidity change of a geometric setting environment between an X-ray generator and a detector, mixing of foreign substances (water, oil, oil mist, scale and so on, for example) into an optical space between an X-ray generator and a detector where an X-ray beam is irradiated, and so on can be listed.

Therefore, an X-ray thickness gauge usually has a calibration curve calibration function capable of calibrating a calibration curve. Specifically, the X-ray thickness gauge measures detected doses using about 10 incorporated calibration plates, to calibrate the calibration curve using these detected doses (refer to Patent Document 1, for example).

[Prior Art Document]

[Patent Document]

[Patent Document 1] Japanese Examined Patent Application Publication No. Hei 2-37523

In US 4 510 577 A a noncontact thickness gauge system for measuring the thickness of a material is disclosed which includes a source of penetrating radiation, a radiation detector, a memory, and a processor.

US 2007/116183 A1 provides a technology for reducing artifacts attributable to the non-linearity in the input-output characteristic of a radiation detector and beam hardening of radiation in a tomograph.

US 2003/142883 A1 discloses an image correction data calculation apparatus including a calibration pattern display unit, an image display unit, an image capturing unit, and an arithmetic operation unit.

US 2011/002813 A1 relates to a technique for analyzing the concentration of a specific component in a sample liquid, such as a method for analyzing a sample.

US 2011/310376 A1 provides an apparatus and method of correcting an image.

JP S56 106107 A shows a radiation thickness measuring device to perform calibration rapidly by the use of a small number of reference plates by beforehand inserting a reference plate of a predetermined thickness, obtaining an absorption characteristic curve and correcting the absorption characteristic curve in actual measurement.

JP S57 40604 A teaches a thickness measuring apparatus with radiation to achieve a quicker measurement and a higher accuracy by arranging a thickness setting device for setting specified three reference thicknesses within the measuring range and a reference plate or the like with a thickness thus set in the correction of a absorption characteristic curve.

JP S58 62508 A is about a device and method of measuring thickness with a thickness gauge of the kind consisting of a radiation source producing a beam aimed at a detector, whereby a material to be gauged obstructs the radiation beam, so that the intensity of radiation received by the detector, and hence the detector output varies and said variation can be translated into a thickness measurement.

JP H03 237310 A teaches an X-ray thickness gauge to obtain the X-ray thickness gauge which has high accuracy by detecting the variation of a tube voltage or tube current as information on the quantity of X rays and correcting a found calibration curve upon occasion at the time of measurement.

JP 2006 184183 A provides a device for measuring a physical quantity that intends to improve resolution over across-the-board measuring range, and to provide a method of measuring the physical quantity using the device.

US 4 088 886 A shows an apparatus and a method for measuring thickness of sheet material, particularly in a rolling mill, and controlling a roll stand.

[Summary of the Invention]

[Problems to be solved by the Invention]

Since the calibration curve calibration function of the method shown in Patent Document 1 is a system which is provided with a plurality of reference plates with different thicknesses, and sets a plurality of thickness reference points (calibration points) by one reference plate or the combination of a plurality of the reference plates, it is possible to perform calibration with high precision.

However, since high precision is required for manufacturing and assembling a plurality of the reference plates, there is a problem that an operation for calibration and a configuration of the apparatus become complicate.

The present invention makes it an object to provide an X-ray thickness gauge with a simple calibration function by one calibration plate, without being providing with a plurality of the relevant reference plates, and a calibration method for the same.

[Means for Solving the Problem]

An X-ray thickness gauge of the invention defined in the appended claim 1 measures a plate thickness of a measured object, based on detected doses obtained by irradiating the measured object with X-ray and a calibration curve, and can perform a calibration curve calibration processing to calibrate the calibration curve.

The X-ray thickness gauge is provided with first storage means, second storage means, measuring means, first calculation means, second calculation means, reading means and calibration means.

The first storage means stores a correction curve indicating detected dose change rates at a plurality of calibration points defining desired thicknesses, for each disturbance factor varying the detected dose.

The second storage means stores a detected dose in a first state in which a calibration plate is not inserted in an X-ray beam, a detected dose in a second state in which the calibration plate is inserted in the X-ray beam, and a detected dose in a third state in which the X-ray is blocked, here the detected doses are used at the time of creating the calibration curve.

The measuring means measures detected doses in the first to third states, respectively, at the time of calibration processing of the calibration curve.

The first calculation means calculates first detected dose change rates indicating change rates of the detected doses in the first to third states, based on the respective measured detected doses and the respective stored detected doses.

The second calculation means calculates a second detected dose change rate indicating a change rate of the detected doses at each of the calibration points, based on the calculated first detected dose change rates.

The reading means reads a correction curve which coincides with or is approximated to a curve indicating the calculated second detected dose change rate, out of a plurality of the stored correction curves, from the first storage means.

The calibration means corrects the detected doses at the respective calibration points using the read correction curve, and calibrates the calibration curve, based on the relevant corrected detected doses.

[Brief Description of the Drawings]

[Fig. 1] is a schematic diagram showing a configuration example of an X-ray thickness gauge according to an embodiment.

[Fig. 2] is a schematic diagram showing an example of information which is previously stored in the memory in the calculation device according to the same embodiment.

[Fig. 3] is a flow chart showing an example of a calibration curve calibration processing by the X-ray thickness gauge according to the same embodiment.

[Fig. 4] is a schematic diagram showing an example of the calibration curve calibration processing by the X-ray thickness gauge according to the same embodiment.

[Fig. 5] is a schematic diagram showing an example of the calibration curve calibration processing by the X-ray thickness gauge according to the same embodiment.

[Embodiments to practice the Invention]

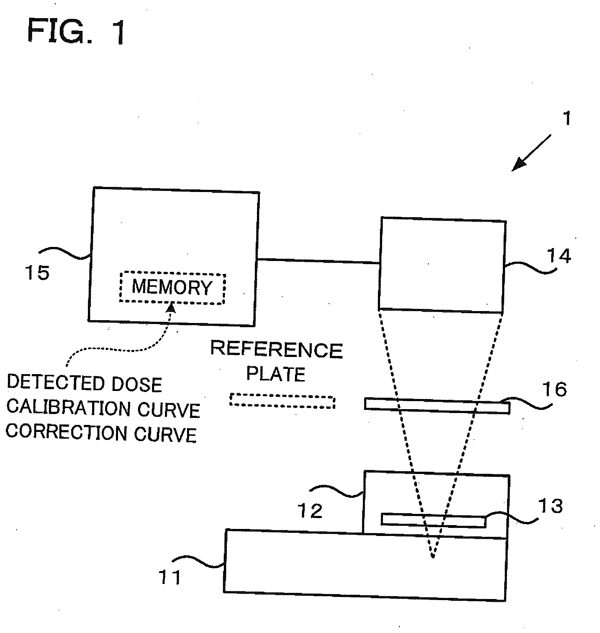

Fig. 1 is a schematic diagram showing a configuration example of an X-ray thickness gauge according to an embodiment. An X-ray thickness gauge 1 is provided with an X-ray generator 11, a calibration device 12, a calibration plate 13, an X-ray detector 14 and a calculation device 15, as shown in Fig. 1. To begin with, functions which the respective devices 11 to 15 composing the X-ray thickness gauge 1 have will be described.

The X-ray generator 11 is an apparatus to irradiate a desired object with an X-ray beam. As the desired object, a measured object 16 or the calibration plate 13 can be listed. The measured object 16 is an object a plate thickness of which is to be measured, that is an object with an unknown plate thickness. The calibration plate 13 is an object which is used so as to measure a detected dose and is used when a calibration curve is created or calibrated, and is an object with a known plate thickness.

The calibration device 12 usually incorporates one calibration plate 13, and is a device which can be set into any of two states that one calibration plate 13 is inserted into the X-ray beam, or the calibration plate 13 is not inserted into the X-ray beam, in accordance with an operation of a user.

In addition, the calibration device 12 may be configured to have one or more calibration plates 13.

Furthermore, though not shown in Fig. 1, a shutter which can block the X-ray beam irradiated from the X-ray generator 11 is incorporated in the calibration device 12, and to use or not to use the shutter can appropriately be set in accordance with an operation of a user. This shutter is used for measuring an offset amount.

In addition, reference plates for setting a plurality of thickness calibration points in the case of measuring the detected doses and creating a calibration curve is set at the position of the measured object 16, and the detected doses and the calibration curve are previously stored in the X-ray thickness gauge 1.

Furthermore, it is necessary for the thickness of the calibration plate 13 incorporated in the calibration device 12 to satisfy two conditions (A), (B) shown as follows.

(A) To be able to cancel the error at a plate thickness close to a plate thickness where thickness measurement precision specification is most severe.
(B) To be able to discriminate values of detected dose change rates at respective plate thickness calibration points, at the time of creating a calibration curve, for each disturbance condition. Hereinafter, the reason will be described.

To begin with, the principle of the present invention will be described. The principle of invention of the present X-ray thickness gauge is that detected doses are obtained by reference plates for setting a plurality of thickness calibration points which are provided at an outside that is not included in the X-ray thickness gauge, and this calibration curve is previously created from the obtained detected doses, and furthermore, detected dose change rates in which each detected dose changes due to disturbance giving variation to the detected dose are obtained, as a form of a correction curve connecting the respective calibration points.

And at the time of calibration, a detected dose change rate of this time is obtained, using one calibration plate, from the detected dose change rate of this calibration plate at the initial state or the previous time, and a correction curve which coincides with the previously obtained detected dose change rate (calibration curve) or a correction curve which is approximated within a predetermined error is selected, and thereby a calibrated curve which is calibrated using the selected correction curve is created.

That is, the change in the detected dose due to disturbance is obtained from the detected dose change rate of one calibration plate, to correct the detected dose of the previously obtained calibration curve.

Accordingly, it is necessary that the one calibration plate 13 is made a calibration plate with a thickness which can detect a change rate for a predetermined disturbance condition (B), and can realize the desired thickness measurement precision (A).

When the X-ray detector 14 detects the amount of X-ray which has transmitted an object (hereinafter, written as an X-ray transmission amount), the X-ray detector 14 measures a detected dose corresponding to the relevant detected X-ray transmission amount, and transmits a signal indicating this detected dose to the calculation device 15. This X-ray detector 14 may be called an ionization chamber, and the above-described detected dose is a value of a current generated when the gas filled in the X-ray detector 14 is ionized with the X-ray.

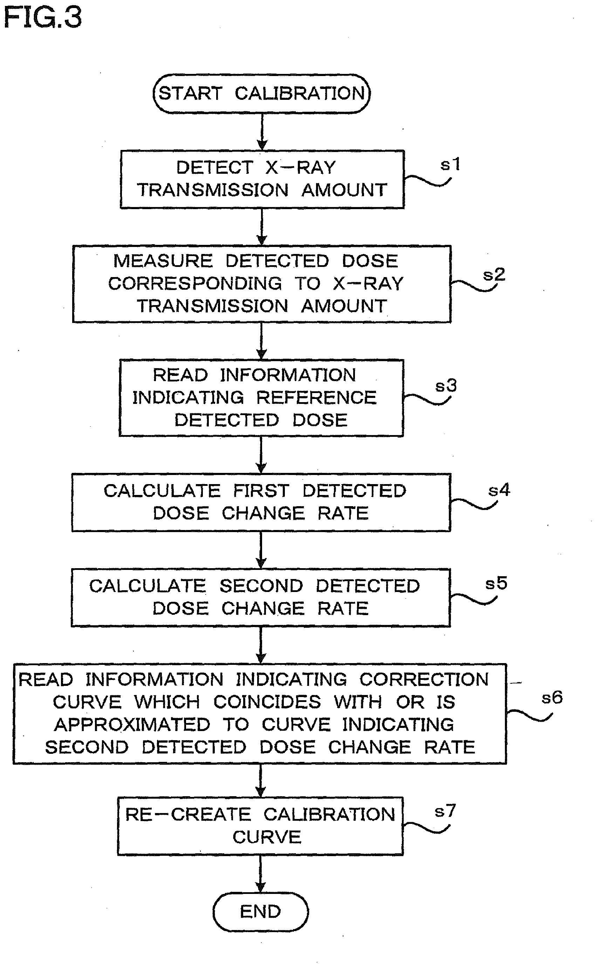

When accepting an input of the signal transmitted from the X-ray detector 14, the calculation device 15 executes a calibration curve calibration processing to calibrate the previously created calibration curve, using the detected dose indicated by the relevant signal whose input has been accepted. In addition, since the detail of the calibration curve calibration processing will be described later, along with the description of a flow chart of Fig. 3, the detailed description thereof will be omitted here.

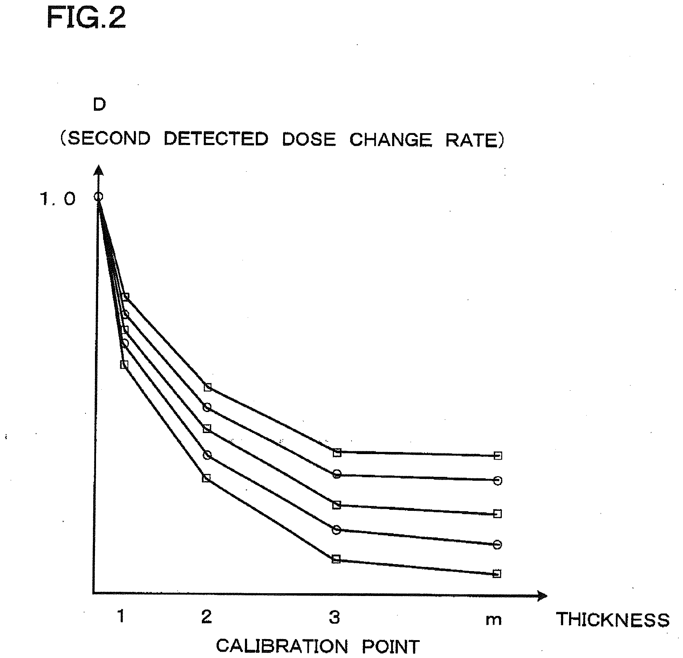

In addition, in the calculation device 15, a memory to store information indicating the detected doses (hereinafter, written as reference detected doses) used at the time of creating the calibration curve. Furthermore, in the memory in the calculation device 15, information indicating the correction curves each of which has been created by previously calculating detected dose change rates at a plurality of calibration points to define the desired thicknesses, for each disturbance factor to make the detected dose to be varied, as shown in Fig. 2, is also stored. Furthermore, it is preferable to make these correction curves into a table.

Here, an example of a detected dose calibration processing by the X-ray thickness gauge configured as described above will be described with reference to schematic diagrams of Figs. 2, 4, 5, and a flow chart of Fig. 3. In addition, in the memory in the calculation device 15, the information indicating the reference detected doses which have been used at the time of creating the calibration curve, and the information indicating the correction curves shown in Fig. 2 are previously stored, and it is decided that the X-ray thickness gauge 1 (the calculation device 15 included therein) can appropriately read these various information.

In Fig. 2, the vertical axis shows a detected dose change rate (D value), and that DC = Ni shows that the disturbance as described above is set in the condition where the disturbance is discriminated as a value.

To begin with, the X-ray detector 14 detects an X-ray transmission amount in a first state in which the measured object 16 and the calibration plate 13 are not inserted in the X-ray beam irradiated from the X-ray generator 11, an X-ray transmission amount in a second state in which the calibration plate 13 is inserted in the X-ray beam irradiated from the X-ray generator 11, an X-ray transmission amount in a third state in which the X-ray beam irradiated from the X-ray generator 11 is blocked by the shutter in the calibration device 12 (step S1).

Subsequently, the X-ray detector 14 measures a detected dose $IN_o$ corresponding to the detected X-ray transmission amount in the first state, a detected dose $IN_{CL}$ corresponding to the detected X-ray transmission amount in the second state, a detected dose $IN_B$ corresponding to the detected X-ray transmission amount in the third state, and sends a signal indicating these detected doses $IN_o$, $IN_{CL}$, $IN_B$ to the calculation device 15 (step S2). In addition, in L of the above-described detected dose $IN_{CL}$, 1 that is the number of the calibration plates 13 inserted in the X-ray beam is substituted.

However, it is possible to make the number of the calibration plates a plural number, but it is desirable that the number is one.

Next, when accepting an input of the signal transmitted from the X-ray detector 14, the calculation device 15 reads the information indicating reference detected doses $IS_o$, $IS_{CL}$, $IS_B$ which have been used at the time of creating the calibration curve, and correspond to the X-ray transmission amounts in the first to third states, triggered by the relevant signal whose input have been accepted (step S3). In addition, in L of the above-described reference detected dose $IS_{CL}$, 1 that is the number of the calibration plates 13 inserted in the X-ray beam is substituted.

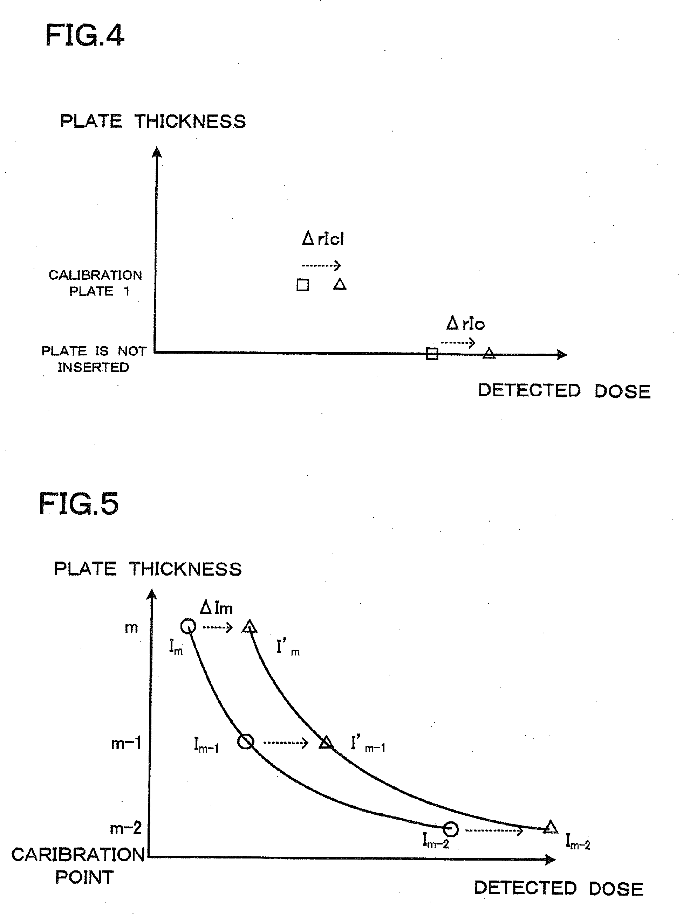

Subsequently, the calculation device 15 calculates first detected dose change rates $\Delta rl_o$, $\Delta rl_{CL}$ as shown in Fig. 4, based on the detected doses $IN_o$, $IN_{CL}$, $IN_B$ shown by the signal whose input has been accepted in the step S3, the reference detected doses $IS_o$, $IS_{CL}$, $IS_B$ shown by the information read in the step S3, and expressions (1) and (2) described below (step S4).

In addition, the first detected dose change rate $\Delta rl_o$ indicates a change rate of detected doses corresponding to the X-ray transmission amounts in the first and third states, and the first detected dose change rate $\Delta rl_{CL}$ indicates a change rate of detected doses corresponding to the X-ray transmission amounts in the second and third states.

$$\Delta rI_o = \{(IN_o - IN_B) - (IS_o - IS_B)\} / (IS_o - IS_B) \ \dots \ (1)$$

$$\Delta rI_{CL} = \{(IN_{CL} - IN_B) - (IS_{CL} - IS_B)\} / (IS_{CL} - IS_B) \ \dots \ (2)$$

Next, the calculation device 15 calculates a second detected dose change rate D, based on the first detected dose change rates $\Delta rl_o$, $\Delta rl_{CL}$ calculated in the step S4, and an expression (3) shown below (step S5). In addition, the second detected dose change rate D shows a change rate of the detected dose in each of the calibration points. In addition, when the value corresponding to the first detected dose change rates $\Delta rl_o$, $\Delta rl_{CL}$ is not present in the previously obtained correction curve, the calculation device 15 calculates a correction curve in which the first detected dose change rates $\Delta rl_o$, $\Delta rl_{CL}$, and the corresponding detected doses at the measured thickness of the first detected dose change rates $\Delta rl_o$, $\Delta rl_{CL}$ are approximated from the second detected dose change rates D before and after.

$$D = \Delta rI_{CL} / \Delta rI_o \ \dots \ (3)$$

Subsequently, the calculation device 15 reads (selects) the information indicating the correction curve which coincides with or is approximated to a curve indicating the calculated second detected dose change rate D from the memory (step S6).

Then, after having calculated correction amounts of the detected doses (namely, $\Delta I_m$, $\Delta I_{m-1}$, $\Delta I_{m-2}$ of Fig. 5) at respective calibration points m to m-2 of the correction curve shown by the information read in the step S6, the calculation device 15 calculates detected doses (namely, $I'_m$, $I'_{m-1}$, $I'_{m-2}$ of Fig. 5) after calibration at the respective calibration points. And the calculation device 15 re-creates a calibration curve as shown in Fig. 5, from the calculated detected doses and the plate thicknesses of the respective calibration points (step S7). By this means, the calibration curve is calibrated. In addition, the correction amount $\Delta I_m$ of the detected dose at the above-described each calibration point m is calculated, based on an expression (4) described blow.

$$\Delta I_m = D_m \ x \ \Delta r I_o \ x \ I_m \quad ... \ (4)$$

In addition, the detected dose after calibration at the above-described each calibration point is calculated, based on a following expression (5).

$$I'_m = I_m + \Delta I_m \quad ... \ (5)$$

$I'_{m-1}$, $I'_{m-2}$ can be obtained in a similar manner.

According to the embodiment described above, since the X-ray thickness gauge is provided with the calculation device 15 having the memory to store the detected doses and the correction curves used at the time of creating the calibration curve, and the function to calibrate the calibration curve using the correction curve which coincides with or is approximated to the curve indicating the second detected dose change ratio D, out of a plurality of the correction curves stored in the memory, and it is possible to provide the X-ray thickness gauge having the detected dose calibration function which can calibrate the calibration curve by one calibration plate, without calibrating a lot of the calibration points with a plurality of reference plates.

In addition, conventionally, it has been necessary to make the material of the measured object and the calibration plate 13 equal to or approximate to each other, but according to the present embodiment, since the detected doses at the respective calibration points are not actually measured, at the time of calibration processing of the calibration curve, but the detected dose change rate is obtained by one calibration plate, and the detected doses at the respective calibration points are calculated with reference to the previously created correction curves, it is not necessary to make the material of the measured object and the calibration plate equal to or approximate to each other.

Accordingly, it is possible to create the calibration plate with material such as stainless causing less aged deterioration.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

[Description of the Symbols]

1 ... X-ray thickness gauge, 11 ... X-ray generator, 12 ... calibration device, 13 ... calibration plate, 14 ... X-ray detector, 15 ... calculation device

## Claims

1. An X-ray thickness gauge (1) for measuring a plate thickness of a measured object, based on a detected dose obtained by irradiating the measured object with X-ray and a calibration curve, and for executing a calibration curve calibration processing to calibrate the calibration curve, the X-ray thickness gauge (1), comprising:

   first storage means for storing a plurality of correction curves each indicating detected dose change rates at a plurality of calibration points defining desired thicknesses, for each disturbance factor varying the detected dose; second storage means for storing a detected dose in a first state in which a calibration plate (13) is not inserted in an X-ray beam, a detected dose in a second state in which the calibration plate (13) is inserted in the X-ray beam, and a detected dose in a third state in which the X-ray is blocked, the detected doses being used at the time of creating the calibration curve;

measuring means for measuring detected doses in the first to third states, respectively, at the time of calibration processing of the calibration curve;

first calculation means for calculating first detected dose change rates indicating change rates of the detected doses in the first to third states, based on the respective measured detected doses and the respective stored detected doses;

second calculation means for calculating a second detected dose change rate indicating a change rate of the detected doses at each of the calibration points, based on the calculated first detected dose change rates;

reading means for reading a correction curve which coincides with or is approximated to a curve indicating the calculated second detected dose change rate, out of a plurality of the stored correction curves, from the first storage means; and

calibration means for correcting the detected doses at the respective calibration points using the read correction curve, and for calibrating the calibration curve, based on the relevant corrected detected doses.

2. The X-ray thickness gauge (1) according to Claim 1, wherein: the second state is a state in which one calibration plate (13) is inserted.

3. The X-ray thickness gauge (1) according to Claim 1, being arranged such that when a value corresponding to the first detected dose change rates is not present in the correction curve, the second calculation means obtains the second detected dose change rate at each of the calibration points, using the first detected dose change rates and values of the correction curves sandwiching the value corresponding to the first detected dose change rates.

**Patentansprüche**

1. Röntgenstrahl-Dickenmessgerät (1) zum Messen einer Plattendicke eines Messobjekts basierend auf einer erfassten Dosis, die durch Bestrahlen des Messobjekts mit Röntgenstrahlen und einer Kalibrierungskurve erhalten wird, und zum Ausführen einer Kalibrierungskurven-Kalibrierungsverarbeitung zum Kalibrieren der Kalibrierungskurve, wobei das Röntgenstrahl-Dickenmessgerät (1) umfasst:

erste Speichermittel zum Speichern einer Vielzahl von Korrekturkurven, die jeweils erfasste Dosisänderungsraten an einer Vielzahl von Kalibrierungspunkten angeben, welche die gewünschten Dicken definieren, wobei jeder Störfaktor die erfasste Dosis variiert;

zweite Speichermittel zum Speichern einer erfassten Dosis in einem ersten Zustand, in dem eine Kalibrierungsplatte (13) nicht in einen Röntgenstrahl eingesetzt ist, einer erfassten Dosis in einem zweiten Zustand, in dem die Kalibrierungsplatte (13) in den Röntgenstrahl eingesetzt ist und einer erfassten Dosis in einem dritten Zustand, in dem der Röntgenstrahl blockiert ist, wobei die erfassten Dosen zum Zeitpunkt der Erzeugung der Kalibrierungskurve verwendet werden;

Messmittel zum Messen erfasster Dosen im jeweils ersten bis dritten Zustand zum Zeitpunkt der Kalibrierungsverarbeitung der Kalibrierungskurve;

erste Berechnungsmittel zum Berechnen erster erfasster Dosisänderungsraten, die Änderungsraten der erfassten Dosen im ersten bis dritten Zustand angeben, basierend auf den jeweiligen gemessenen erfassten Dosen und den jeweiligen gespeicherten erfassten Dosen;

zweite Berechnungsmittel zum Berechnen einer zweiten erfassten Dosisänderungsrate, die eine Änderungsrate der erfassten Dosen an jedem der Kalibrierungspunkte angibt, basierend auf den berechneten ersten erfassten Dosisänderungsraten;

Lesemittel zum Lesen einer Korrekturkurve, die mit einer Kurve übereinstimmt oder daran angenähert ist, welche die berechnete zweite erfasste Dosisänderungsrate aus einer Vielzahl der gespeicherten Korrekturkurven von dem ersten Speichermittel angibt; und

Kalibrierungsmittel zum Korrigieren der erfassten Dosen an den jeweiligen Kalibrierungspunkten unter Verwendung der Lese-Korrekturkurve und zum Kalibrieren der Kalibrierungskurve basierend auf den relevanten korrigierten erfassten Dosen.

2. Röntgenstrahl-Dickenmessgerät (1) nach Anspruch 1, wobei: der zweite Zustand ein Zustand ist, in dem eine Kalibrierungsplatte (13) eingesetzt ist.

3. Röntgenstrahl-Dickenmessgerät (1) nach Anspruch 1, das derart angeordnet ist, dass, wenn ein Wert, der dem ersten erfassten Dosisänderungsraten entspricht, in der Korrekturmesskurve nicht vorliegt, erhält das zweite Berechnungsmittel die zweite erfasste Dosisänderungsrate an jedem der Kalibrierungspunkte unter Verwendung der ersten erfassten Dosisänderungsraten und Werte der Korrekturkurven, die den Wert, der der ersten erfassten Dosierungsänderungsrate entspricht, eingrenzen.

**Revendications**

1. Jauge d'épaisseur par rayons X(1) pour mesurer une épaisseur de plaque d'un objet mesuré sur la base d'une dose détectée obtenue par irradiation de l'objet mesuré par des rayons X et d'une courbe d'étalonnage, et pour exécuter un traitement d'étalonnage de courbe d'étalonnage pour étalonner la courbe d'étalonnage, la jauge d'épaisseur par rayons X (1) comprenant :

   un premier moyen de stockage pour stocker une pluralité de courbes de correction indiquant chacune des taux de changement de doses détectées en une pluralité de points d'étalonnage définissant des épaisseurs souhaitées, pour chaque facteur perturbant faisant varier la dose détectée ;
   un second moyen de stockage pour stocker une dose détectée dans un premier état dans lequel une plaque d'étalonnage (13) n'est pas insérée dans un faisceau de rayons X, une dose détectée dans un deuxième état dans lequel la plaque d'étalonnage (13) est insérée dans le faisceau de rayons X et une dose détectée dans un troisième état dans lequel les rayons X sont bloqués, les doses détectées étant utilisées au moment de la création de la courbe d'étalonnage ;
   un moyen de mesure pour mesurer des doses détectées dans les premier à troisième états, respectivement, au moment du traitement d'étalonnage de la courbe d'étalonnage ;
   un premier moyen de calcul pour calculer des premiers taux de changement de doses détectées indiquant des taux de changement des doses détectées dans les premier à troisième états sur la base des doses détectées mesurées respectives et des doses détectées stockées respectives ;
   un second moyen de calcul pour calculer un second taux de changement de doses détectées indiquant un taux de changement des doses détectées à chacun des points d'étalonnage sur la base des premiers taux de changement calculés des doses détectées ;
   un moyen de lecture pour lire une courbe de correction qui coïncide ou se rapproche d'une courbe indiquant le second taux de changement calculé de doses détectées, sortant d'une pluralité des courbes de correction stockées, sur le premier moyen de stockage ; et
   un moyen d'étalonnage pour corriger les doses détectées aux points d'étalonnage respectifs en utilisant la courbe de correction lue et pour étalonner la courbe d'étalonnage sur la base des doses détectées corrigées pertinentes.

2. Jauge d'épaisseur par rayons X(1) selon la revendication 1, dans lequel le deuxième état est un état dans lequel une plaque d'étalonnage (13) est insérée.

3. Jauge d'épaisseur par rayons X (1) selon la revendication 1, agencée de sorte que, lorsqu'une valeur correspondant aux premiers taux de changement des doses détectées n'est pas présente dans la courbe de correction, le second moyen de calcul obtienne le second taux de changement des doses détectées à chacun des points d'étalonnage en utilisant les premiers taux de changement de doses détectées et les valeurs des courbes de correction prenant en sandwich la valeur correspondant aux premiers taux de changement des doses détectées.

# FIG. 1

1

15

MEMORY

14

DETECTED DOSE
CALIBRATION CURVE
CORRECTION CURVE

REFERENCE
PLATE

16

12

13

11

# FIG.2

D

(SECOND DETECTED DOSE CHANGE RATE)

1.0

1     2     3     m    THICKNESS

CALIBRATION POINT

# FIG.3

```
         ( START CALIBRATION )
                    │
                    ▼
        ┌───────────────────────┐
        │   DETECT  X-RAY       │        s1
        │ TRANSMISSION  AMOUNT  │
        └───────────────────────┘
                    │
                    ▼
        ┌───────────────────────┐
        │ MEASURE DETECTED DOSE │
        │ CORRESPONDING TO X-RAY│        s2
        │  TRANSMISSION AMOUNT  │
        └───────────────────────┘
                    │
                    ▼
        ┌───────────────────────┐
        │   READ  INFORMATION   │
        │ INDICATING REFERENCE  │        s3
        │    DETECTED  DOSE     │
        └───────────────────────┘
                    │
                    ▼
        ┌───────────────────────┐
        │ CALCULATE FIRST DETECTED│      s4
        │   DOSE  CHANGE RATE   │
        └───────────────────────┘
                    │
                    ▼
        ┌───────────────────────┐
        │ CALCULATE SECOND DETECTED│    s5
        │   DOSE  CHANGE RATE   │
        └───────────────────────┘
                    │
                    ▼
    ┌───────────────────────────────┐
    │ READ INFORMATION INDICATING CORRECTION│
    │  CURVE  WHICH  COINCIDES  WITH  OR  IS │   s6
    │   APPROXIMATED  TO  CURVE  INDICATING  │
    │  SECOND DETECTED DOSE CHANGE RATE      │
    └───────────────────────────────┘
                    │
                    ▼
        ┌───────────────────────┐
        │ RE-CREATE CALIBRATION │        s7
        │        CURVE          │
        └───────────────────────┘
                    │
                    ▼
              (   END   )
```

# FIG.4

# FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI237523 B
- US 4510577 A
- US 2007116183 A1
- US 2003142883 A1
- US 2011002813 A1
- US 2011310376 A1
- JP S56106107 A
- JP S5740604 A
- JP S5862508 A
- JP H03237310 A
- JP 2006184183 A
- US 4088886 A